# EUROPÄISCHE PATENTSCHRIFT

(11) **EP 3 160 614 B1**
(45) Veröffentlichungstag und Bekanntmachung des Hinweises auf die Patenterteilung: **28.07.2021**
(21) Anmeldenummer: 15730507.9
(22) Anmeldetag: 23.06.2015
(51) Int. Cl.: B01D 36/00, B01D 27/08, B01D 27/10

(54) **FILTERSYSTEM UND FLÜSSIGKEITSFILTER**
FILTER SYSTEM AND LIQUID FILTER
SYSTÈME DE FILTRATION ET FILTRE POUR LIQUIDES

(30) Priorität: 27.06.2014 DE 102014009327
(43) Veröffentlichungstag der Anmeldung: 03.05.2017
(73) Patentinhaber: MANN+HUMMEL GmbH, 71636 Ludwigsburg (DE)
(72) Erfinder: SCHRECKENBERGER, Dieter, 71729 Erdmannhausen (DE); THALMANN, Christian, 67346 Speyer (DE); HASENFRATZ, Robert, 71334 Waiblingen (DE); WAGNER, Fabian, 71696 Möglingen (DE); PFLÜGER, Frank, 74343 Sachsenheim (DE); RÖSGEN, André, 73630 Remshalden (DE)
(74) Vertreter: Mann + Hummel Intellectual Property
(86) Internationale Anmeldenummer: PCT/EP2015/064045
(87) Internationale Veröffentlichungsnummer: WO 2015/197581

(56) Entgegenhaltungen:
- WO-A1-2012/081983
- DE-U1-202008 009 502
- JP-A- 2011 062 658
- US-A- 3 513 979
- US-A- 3 682 320
- US-A1- 2013 043 181

## Beschreibung

### Technisches Gebiet

Die Erfindung bezieht sich auf ein Filtersystem nach Anspruch 1 und einen Flüssigkeitsfilter nach Anspruch 3

### Stand der Technik

Aus der JP 2011 062658 A und der US 2013/043181 A1 sind Spin-On Filter bekannt. Aus der US 3 692 239 ist ein mittels einer Schelle am Filterkopf befestigter Filter bekannt. In der EP 2 110 539 A2 wird eine Filtereinrichtung für Dieselkraftstoff beschrieben, die in einem topfförmigen Filtergehäuse ein ringförmiges Filterelement aufweist, das radial von außen nach innen von dem zu reinigenden Kraftstoff durchströmt wird. Das Filterelement weist an seinen axialen Stirnseiten jeweils eine Endscheibe auf. Die Zufuhr des ungereinigten Kraftstoffes erfolgt im Bereich einer ersten axialen Stirnseite über ein Heizmodul, das auf einen Deckel des Filtergehäuses aufgeflanscht und mithilfe einer Steckverbindung gehalten ist. In das Heizmodul ist ein Zulaufstutzen eingebracht zum Anschluss an eine Kraftstoffleitung, wobei der Kraftstoff auf der gegenüberliegenden Seite des Heizmoduls über einen weiteren Stutzen zur radial außen liegenden Rohseite des Filterelementes geleitet wird. Ein Zentralstutzen am Heizmodul ragt durch eine Öffnung in der Endscheibe in den Reinraum ein; der Zentralstutzen ist Teil einer Druckmessvorrichtung, über die der Differenzdruck zwischen Roh- und Reinseite gemessen werden kann. Die Ableitung des gereinigten Fluids erfolgt über die dem Heizmodul axial gegenüberliegende Endscheibe des Filterelementes.

### Offenbarung der Erfindung

Der Erfindung liegt die Aufgabe zugrunde, in konstruktiv einfacher Weise ein Rohranschlussstück mit einer Filtereinrichtung zu verbinden.

Diese Aufgabe wird erfindungsgemäß mit den Merkmalen der Ansprüche 1 und 3 gelöst. Die Unteransprüche geben zweckmäßige Weiterbildungen an.

Die erfindungsgemäße Filtereinrichtung bzw. -kartusche wird vorzugsweise zur Flüssigkeitsfiltration eingesetzt, insbesondere zur Kraftstofffiltration wie zum Beispiel von Dieselkraftstoff. Grundsätzlich möglich ist aber auch ein Einsatz zur Filtration gasförmiger Fluide.

Die Filtereinrichtung weist in einem Filtergehäuse ein hohlzylindrisches bzw. ringförmiges Filterelement auf, das in Radialrichtung, vorzugsweise radial von außen nach innen, von dem zu reinigenden Fluid durchströmt wird. Das Filterelement weist an seinen beiden axialen Stirnseiten jeweils eine Endscheibe auf, wobei zumindest in eine Endscheibe eine Strömungsöffnung eingebracht ist, in die ein Rohranschlussstück einsetzbar ist. Bei einer Durchströmungsrichtung radial von außen nach innen bildet der Innenraum die Reinseite, über die das gereinigte Fluid axial über die Strömungsöffnung und das Rohranschlussstück abgeleitet werden kann.

Das Filtergehäuse weist außerdem einen Deckel auf, welcher die offene Seite des Filtergehäuses mit dem darin aufgenommenen Filterelement verschließt. An dem Deckel ist das Rohranschlussstück in formschlüssiger Weise befestigt. Hierfür weist der Deckel bzw. ein mit dem Deckel verbundenes Bauteil einen radial nach außen gerichteten Kragen - bezogen auf die Filterlängsachse - auf, der im montierten Zustand einen axialen Anschlag für das Rohranschlussstück bildet. Diese formschlüssige Sicherung und Halterung des Rohranschlussstücks an dem Deckel stellt eine montagefreundliche, einfach herzustellende Verbindung dar, die leicht wieder gelöst werden kann, so dass die Filtereinrichtung gegebenenfalls ausgetauscht und eine neue Filtereinrichtung mit dem bestehenden Rohranschlussstück verbunden werden kann. Der Formschluss besteht in Achsrichtung, auch die Montage des Rohranschlussstücks an der Filtereinrichtung erfolgt in Achsrichtung.

Wesentlich hierbei ist, dass ein zugeordneter Verbindungsabschnitt am Rohranschlussstück den Kragen axial übergreift. Zur Montage werden Rohranschlussstück und Filtereinrichtung axial so weit angenähert, bis in gewünschter Weise der Verbindungsabschnitt den Kragen axial übergreift, woraufhin der Formschluss durch eine Verstellbewegung zwischen Rohranschlussstück und Filtereinrichtung in Radialrichtung, also quer zur Filterlängsachse hergestellt wird.

Die Herstellung des Formschlusses zwischen Rohranschlussstück und Kragen am Deckel der Filtereinrichtung erfolgt mithilfe eines Riegels, der in eine Formschlusstasche am Verbindungsabschnitt, die zwischen dem radial gerichteten Kragen und dem Verbindungsabschnitt am Rohranschlussstück angeordnet ist, einführbar ist. Die Einführrichtung des Riegels erfolgt insbesondere quer zur Filterlängsachse, also ebenfalls radial. Der Riegel in der Formschlusstasche liegt axial zwischen dem Kragen und einem Bauteil am Verbindungsabschnitt des Rohranschlussstücks und verhindert ein axiales Entfernen zwischen Rohranschlussstück und Filtereinrichtung, so dass das Rohranschlussstück an der Filtereinrichtung formschlüssig gesichert ist.

In einer bevorzugten Ausführungsform sind Deckel und Filtergehäuse unlösbar miteinander verbunden, beispielsweise durch Schweißen, Löten, Bördeln oder Kleben. Somit wird ein einfach zu wechselnder Einwegwechselfilter ausgebildet, der insbesondere mit einem Filterkopf oder einem erfindungsgemäßen Rohranschlussstück verbindbar ist.

Der Riegel ist beispielsweise U-förmig ausgebildet und wird durch eine Ausnehmung in der die Formschlusstasche begrenzenden Wandung des Verbindungsabschnitts radial in seine Verriegelungsposition eingeschoben, in der das axiale Lösen des Rohranschlussstücks von dem Deckel blockiert ist. Möglich ist aber auch eine rechteckförmige Ausführung des Riegels, der in Radialrichtung ebenfalls in eine Ausnehmung in der Wandung der Formschlusstasche eingeschoben wird und in die Formschlusstasche einragt.

Der Kragen ist entweder einteilig mit dem Deckel oder separat von diesem ausgebildet, jedoch mit dem Deckel bevorzugt unverlierbar oder unlösbar verbunden, beispielsweise durch Schweißen, Löten, Bördeln oder Kleben. Der Deckel besteht beispielsweise aus Metall, auch der Kragen kann als Metallbauteil ausgeführt sein. Bei separater Ausführung ist der Kragen beispielsweise mithilfe einer Umbördelung mit dem Deckel verbunden oder am Deckel angelötet. Bei einteiliger Ausführung von Deckel und Kragen ist letzterer beispielsweise durch Urformen oder radiales Umbiegen eines axialen Abschnittes des Deckels hergestellt.

Gemäß einer weiteren zweckmäßigen Ausführung weist die Filtereinrichtung insbesondere radial versetzt zur Formschlusstasche eine Dichttasche auf, die zur Aufnahme eines Dichtungselementes am Deckel dient. Die Dichttasche ist axial vom Kragen bzw. einem Deckelabschnitt begrenzt und sichert hierdurch das eingesetzte Dichtungselement axial in formschlüssiger Weise. Das Dichtungselement kann als ein Dichtring ausgebildet sein, der am Deckel gehalten, beispielsweise auf einen Stutzen am Deckel aufgeschoben ist. Das Dichtungselement separiert die Roh- von der Reinseite des Filterelementes.

Gemäß einer weiteren zweckmäßigen Ausführung ist der Kragen auf der Außenseite des Deckel von diesem beabstandet. Dies kann beispielsweise dadurch realisiert werden, dass am Deckel ein rohrförmiger, insbesondere strömungsführender Forstsatz vorgesehen ist, an dessen vom Deckel beabstandeten Ende der Kragen angeordnet ist. Vom Deckel beabstandet ist hier so zu verstehen, dass der Deckel eine das Gehäuse verschließende Deckfläche aufweist, von welcher der Kragen, der durchaus auch Teil des Deckels sein kann, beabstandet ist. Dadurch kann weiter bevorzugt zwischen Deckel und Kragen ein insbesondere radial nach außen geöffneter, ringnutförmiger Eingriffsbereich für einen Riegel gebildet sein, wobei besonders bevorzugt die Dichttasche axial auf einer Höhe zwischen Kragen und Deckel und damit radial innerhalb des Eingriffsbereichs angeordnet ist. Durch die Anordnung der Dichtung in unmittelbarer Nähe zum Kragen, an welchem die Formschlüssige Verbindung erfolgen kann, sind die im Betrieb auftretenden, durch Vibrationen hervorgerufenen Formänderungen der Einzelteile im Bereich der Dichtung gering, so dass die Gefahr von Vibrationsbedingten Leckagen reduziert wird.

Die Dichttasche zur Aufnahme des Dichtungselementes kann gegenüber der Formschlusstasche radial nach innen versetzt angeordnet sein. Bezogen auf die Filterlängsachse kommen sowohl axial versetzte Anordnungen als auch Anordnungen auf axial gleicher Höhe von Dichttasche und Formtasche in Betracht. Gegebenenfalls sind auch Ausführungen möglich, bei denen die Dichttasche gegenüber der Formschlusstasche radial nach außen versetzt angeordnet ist.

Die axiale Begrenzung der Dichttasche kann über ein Begrenzungsteil erfolgen, das, gemäß weiterer vorteilhafter Ausführung, separat vom Kragen ausgeführt ist und ebenfalls am Deckel angeordnet ist. Gegebenenfalls kommt auch eine einteilige Ausführung des Begrenzungsteils mit dem Kragen in Betracht. Das Begrenzungsteil kann aus dem gleichen Material wie der Kragen bestehen und entsprechend wie der Kragen mit dem Deckel verbunden sein, beispielsweise durch Löten. Es ist auch eine einteilige Ausführung des Begrenzungsteils mit dem Deckel möglich.

In die Endscheibe des Filterelementes kann ein Zentrierstutzen eingebracht sein, der zur Aufnahme des Rohranschlussstückes dient. Zwischen Rohranschlussstück und Zentrierstutzen ist vorteilhafterweise ein Dichtungselement eingesetzt, um eine strömungsdichte Verbindung zwischen dem Zentrierstutzen und dem Rohranschlussstück zu gewährleisten.

Gemäß weiterer vorteilhafter Ausführung erfolgt sowohl die Zufuhr des Rohfluids als auch die Ableitung des Reinfluids über die gleiche axiale Stirnseite des Filterelementes bzw. jeweils über den Deckel. Hierbei sind Ausführungen möglich, bei denen ein Rohranschlussstück ein gemeinsames Gehäuse für einen Zulaufkanal für die Zufuhr von Rohfluid und einen Ablaufkanal für die Ableitung von Reinfluid aufweist. In einer vorteilhaften Ausführung liegen Zulauf- und Ablaufkanal koaxial zueinander, indem ein Kanal den anderen radial umgreift, wobei die Kanäle strömungsdicht voneinander separiert sind, um einen unerwünschten Austausch von Roh- und Reinfluid zu verhindern. Beispielsweise kann der radial innen liegende Kanal den Ablaufkanal für die Ableitung des Reinfluids bilden und der umgreifende Kanal größeren Durchmessers den Zulaufkanal für die Zufuhr des Rohfluids.

In Betracht kommt aber auch eine parallel versetzte Anordnung von Zulauf- und Ablaufkanal in einem gemeinsamen Gehäuse eines Rohranschlussstücks. Des Weiteren sind Ausführungen möglich, bei denen zwei Rohranschlusstücke nebeneinander liegend an dem Deckel angeordnet sind, wobei die Rohranschlussstücke unabhängig voneinander ausgeführt sind.

Gemäß einer weiteren vorteilhaften Ausführung ist ein Rückschlagventil in das Rohranschlussstück integriert. Das Rückschlagventil verhindert bei einem Lösen des Rohranschlussstücks von der Filtereinrichtung ein unerwünschtes Abströmen von Fluid, welches sich noch in dem Rohranschlussstück befindet. Soweit ein Rückschlagventil auch im Zulaufkanal angeordnet ist, verhindert dieses nach dem Lösen des Rohranschlussstücks von der Filtereinrichtung ein unkontrolliertes Abströmen von Rohfluid.

Gemäß einer weiteren Ausführung umfasst das Rohranschlussstück einen Rücklaufkanal, in den ein Druckregelventil integriert ist.

Gemäß einer weiteren Ausführung des Rohranschlussstücks ist eine Entlüftungsschraube in ein Rohranschlussstück integriert.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
- Fig. 1: einen Flüssigkeitsfilter mit einem ringförmigen bzw. hohlzylindrischen Filter-element in einem Filtergehäuse, auf das ein Deckel aufgesetzt ist, an welchem formschlüssig ein Rohranschlussstück gehalten ist,
- Fig. 2: eine Ausschnittvergrößerung aus dem Bereich der formschlüssigen Befestigung des Rohranschlussstücks am Deckel,
- Fig. 3: Deckel und Rohranschlussstück in gelöster Stellung,
- Fig. 4: in einer Ausführungsvariante eine Verbindung zwischen Rohranschlussstück und Deckel,
- Fig. 5: in einer weiteren Ausführungsvariante ein Rohranschlussstück in formschlüssiger Verbindung mit dem Deckel,
- Fig. 6, 7: eine weitere Ausführungsvariante von Rohranschlussstück und Deckel, wobei Fig. 7 eine Ausschnittvergrößerung aus Fig. 6 darstellt,
- Fig. 8: eine weitere Ausführungsvariante von Rohranschlussstück und Deckel,
- Fig. 9: ein Flüssigkeitsfilter mit integriertem Druckregelventil im Rohranschlussstück,
- Fig. 10: ein Flüssigkeitsfilter mit integrierten Rückschlagventilen im Rohranschluss-stück, in welchem ein Zulauf- und ein Ablaufkanal koaxial angeordnet sind,
- Fig. 11: ein Flüssigkeitsfilter mit integrierter Entlüftungsschraube im Rohranschluss-stück,
- Fig. 12 bis 14: verschiedene Ansichten eines Flüssigkeitsfilters mit zwei separat ausgebildeten Rohranschlussstücken für den Zulauf und den Ablauf des Fluids.

In den Figuren sind gleiche Bauteile mit gleichen Bezugszeichen versehen.

### Ausführungsform(en) der Erfindung

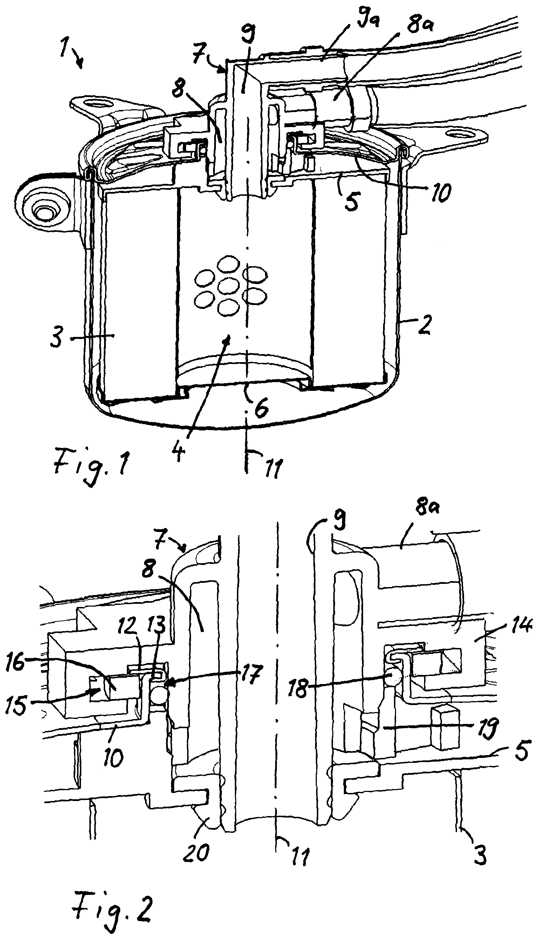

Die Figuren zeigen jeweils eine Filtereinrichtung 1, die als Flüssigkeitsfilter zur Filtration von Kraftstoff, beispielsweise Dieselkraftstoff ausgeführt ist. Im Ausführungsbeispiel gemäß den Fig. 1 bis 3 weist die Filtereinrichtung 1 ein topfförmiges Filtergehäuse 2 zur Aufnahme eines ringförmigen bzw. hohlzylindrischen Filterelementes 3 auf, das radial von außen nach innen von dem zu reinigenden Fluid durchströmt wird. Der Innenraum 4 im Filterelement 3 bildet dementsprechend die Reinseite, die radial außen liegende Mantelfläche die Rohseite am Filterelement. Die axialen Stirnseiten des Filterelementes 3 sind von Endscheiben 5 und 6 verschlossen. Benachbart zur oberen Endscheibe 5, die eine zentrale Strömungsöffnung aufweist, ist ein Rohranschlussstück 7 mit einem Zulaufkanal 8 für die Zufuhr von ungereinigtem Rohfluid und einem Ablaufkanal 9 für die Ableitung gereinigten Reinfluids an der Filtereinrichtung 1 befestigbar. Das Rohranschlussstück 7 ist an einem Deckel 10 befestigbar, der auf die offene Seite des topfförmigen Filtergehäuses 2 aufgesetzt ist. Der Deckel 10 ist fest mit dem Filtergehäuse verbunden.

Der Ablaufkanal 9 des Rohranschlussstücks 7 ragt in die zentrale Strömungsöffnung in der Endscheibe 5 am Filterelement 3 ein und kommuniziert mit dem Innenraum 4, in welchem sich das gereinigte Fluid ansammelt. Die Ableitung des Reinfluids erfolgt somit aus dem Innenraum 4 über die zentrale Strömungsöffnung in der Endscheibe 5 und den Ablaufkanal 9 im Rohranschlussstück 7.

Das Rohranschlussstück 7 ist als Doppelkonnektor ausgebildet mit einem gemeinsamen Gehäuse für den Zulaufkanal 8 und den Ablaufkanal 9. Zulaufkanal 8 und Ablaufkanal 9 sind konzentrisch zueinander angeordnet, wobei der Zulaufkanal 8 einen größeren Durchmesser aufweist als der Ablaufkanal 9 und diesen umgreift. Über Stutzen 8a und 9a sind die Kanäle 8, 9 an Schläuche für die Zufuhr bzw. Ableitung des Fluids angeschlossen.

Die Zufuhr des Rohfluids erfolgt über den Stutzen 8a und den Zulaufkanal 8 zur radial außen liegenden Mantelfläche des Filterelementes 3, welches radial von außen nach innen von dem zu reinigenden Fluid durchströmt wird. Die Ableitung erfolgt, wie vorbeschrieben, aus dem Innenraum 4 axial über den Ablaufkanal 9 und den Ablaufstutzen 9a sowie weiter über den angeschlossenen Schlauch.

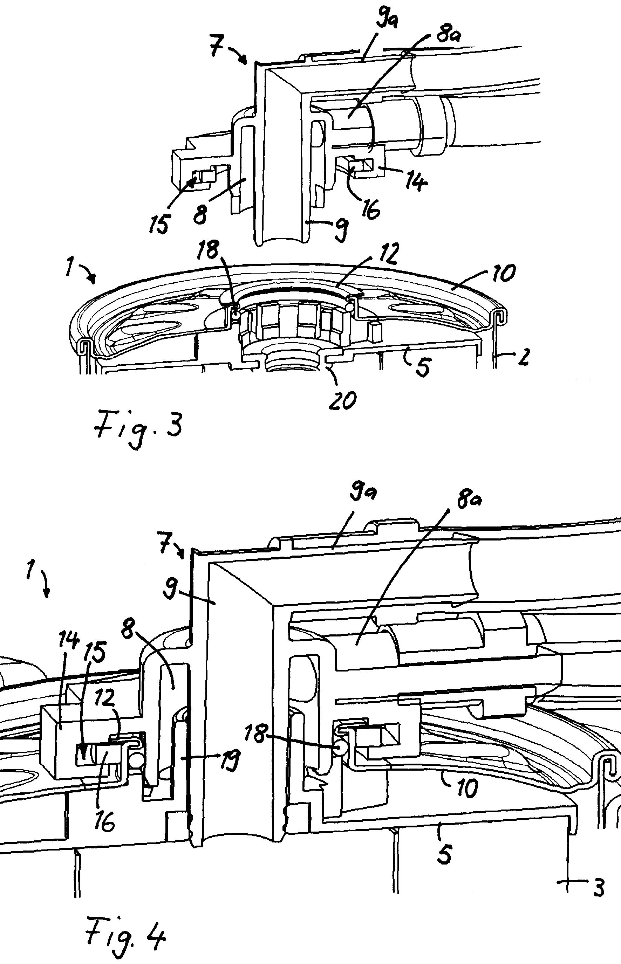

Das Rohranschlussstück 7 ist separat von der Filtereinrichtung 1 ausgeführt und an dem Deckel 10 formschlüssig gehalten. Der Formschluss erfolgt in Richtung der Filterlängsachse 11 über einen umgebogenen Kragen 12 (Fig. 2, 3), der separat vom Deckel 10 ausgebildet ist, jedoch mit dem Deckel 10 verbunden ist. In den Deckel 10 ist eine zentrale Öffnung zur Aufnahme des Rohranschlussstücks 7 eingebracht, wobei an der die zentrale Öffnung begrenzenden Wandung am Deckel 10 ein radial nach innen umgebogener Begrenzungsabschnitt 13 angeformt ist, welcher Träger des sich in Radialrichtung nach außen erstreckenden Kragens 12 ist. Der Kragen 12 kann durch Umbördeln des Begrenzungsabschnittes 13 am Deckel 10 befestigt werden.

Einteilig mit dem Gehäuse des Rohranschlussstücks 7 ist ein Verbindungsabschnitt 14 ausgebildet, welcher eine Formschlusstasche 15 beherbergt, wobei der Verbindungsabschnitt 14 den radial nach außen gerichteten Kragen 12 axial umgreift. Um eine axial formschlüssige Verbindung zwischen dem Rohranschlussstück 7 und dem Deckel 10 herzustellen, ist in die Formschlusstasche 15 im Verbindungsabschnitt 14 ein Riegel 16 eingeschoben, der gemäß Fig. 2 den radial nach außen gerichteten Abschnitt des Kragens 12 untergreift. Zugleich ist der Riegel 16 von den U-förmig ausgebildeten Wandungen des Verbindungsabschnittes 14 gehalten. Der Riegel 16 ist beispielsweise U-förmig ausgebildet und wird über sich in Querrichtung erstreckende Ausnehmungen in der Wandung des Verbindungsabschnittes 14 bis zum Erreichen der axial formschlüssigen Position eingeschoben. Daraufhin ist das Rohranschlussstück 7 axial formschlüssig am Deckel 10 gehalten.

Der radial nach innen gerichtete Begrenzungsabschnitt 13 am Deckel 10 begrenzt außerdem eine Dichttasche 17, in die ein Dichtring 18 eingesetzt ist, welcher am Deckel 10 gehalten ist. In die entgegengesetzte Richtung ist der Dichtring 18 axial von einem Zentrierstutzen 19 abgestützt, der an der Endscheibe 5 angeordnet und in den das Rohranschlussstück 7 einführbar ist. Die Dichttasche 17 liegt axial etwa auf gleicher Höhe wie die Formschlusstasche 15, jedoch gegenüber der Formschlusstasche 15 radial nach innen versetzt.

Ein weiteres Dichtungselement 20 befindet sich an der zentralen Strömungsöffnung, die in die Endscheibe 5 eingebracht ist, wobei der Ablaufkanal 9 an dem ringförmigen Dichtungselement 20 anliegt.

In Fig. 4 erfolgt die axial formschlüssige Verbindung zwischen dem Rohranschlussstück 7 und dem Deckel 10 wie beim ersten Ausführungsbeispiel gemäß den Fig. 1 bis 3. Jedoch ist bei Fig. 4 der Zentrierstutzen 19, welcher einteilig mit der Endscheibe 5 ausgebildet ist, unmittelbar an der Außenwand des Ablaufkanals 9 anliegend ausgeführt, wohingegen bei den Fig. 1 bis 3 der Zentrierstutzen mit radialem Abstand zum Ablaufkanal 9 angeordnet ist. Die axiale Abstützung des Dichtrings 18 in der Dichttasche erfolgt über ein Abstützelement, welches vorteilhafterweise ebenfalls einteilig mit der Endscheibe 5 ausgebildet oder an der Endscheibe 5 angeordnet ist.

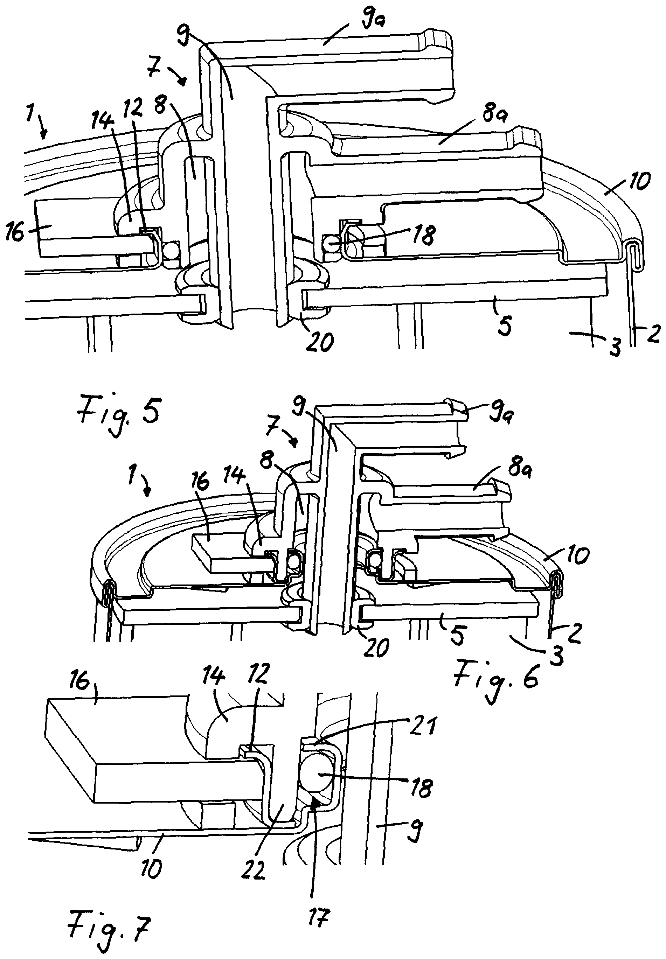

Im Ausführungsbeispiel gemäß Fig. 5 ist der Kragen 12 einteilig mit dem Deckel 10 ausgebildet. Der Kragen 12 bildet den radial nach außen umgebogenen Endabschnitt des Deckels 10 im Bereich der die zentrale Öffnung begrenzenden Wandung.

In das Gehäuse des Rohranschlussstücks 7 ist im Bereich des Verbindungsabschnittes 14 eine sich in Querrichtung erstreckende Öffnung eingebracht, in die ein Riegel 16 eingeschoben ist, der rechteckförmig ausgebildet ist und von dem Kragen 12 umgriffen wird. Dadurch ist eine axial formschlüssige Verbindung zwischen dem Rohranschlussstück 7 und dem Deckel 10 gegeben.

Die sich in Achsrichtung erstreckende Wandung des Deckels 10, welche die zentrale Öffnung begrenzt, bildet radial nach außen eine Abstützung für den Dichtring 18.

Im Ausführungsbeispiel gemäß den Fig. 6 und 7 ist der Kragen 12 separat vom Deckel 10 ausgebildet und in geeigneter Weise, beispielsweise über Löten, mit dem Deckel 10 verbunden. Der Kragen 12 weist an seinem dem Deckel 10 abgewandten Ende einen radial nach außen umgebogenen Abschnitt auf, der im montierten Zustand den in Querrichtung eingeschobenen, rechteckförmigen Riegel 16 übergreift.

Die Dichttasche 17 zur Aufnahme des Dichtrings 18 ist von einem Begrenzungsteil 21 übergriffen, das einteilig mit dem Deckel ausgebildet ist und den radial nach innen umgebogenen Endabschnitt im Bereich der zentralen Öffnung im Deckel bildet. Das Begrenzungsteil 21 befindet sich gegenüber dem Kragen 12 radial nach innen versetzt. Radial nach außen ist der Dichtring 18 von einer Wandung 22 begrenzt, die einteilig mit dem Verbindungsabschnitt 14 am Rohranschlussstück 7 ausgebildet ist.

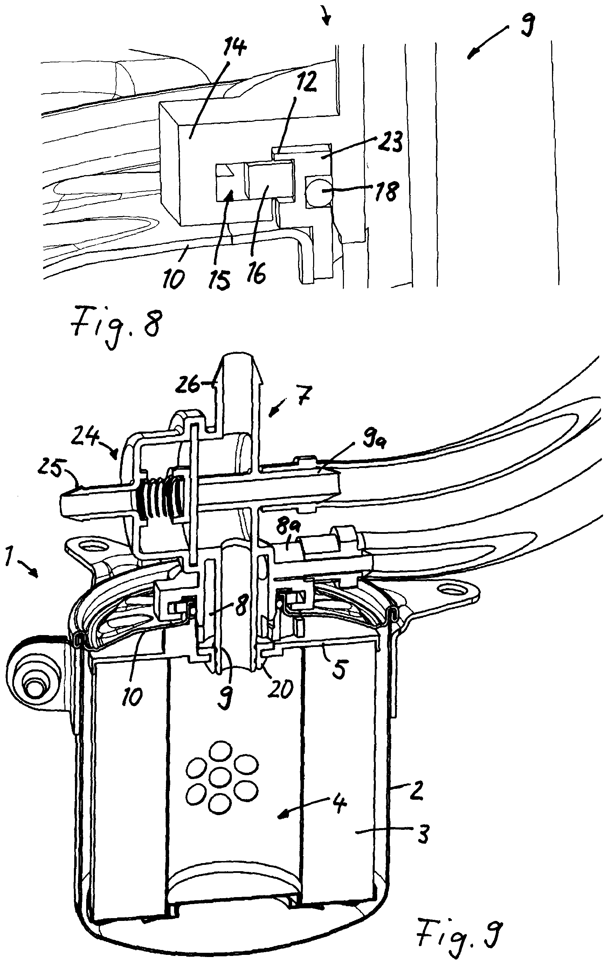

Im Ausführungsbeispiel gemäß Fig. 8 ist der Kragen 12 radial nach außen gerichtet und einteilig mit einem Formschlussbauteil 23 ausgebildet, das separat vom Deckel 10 ausgeführt, jedoch fest mit diesem verbunden ist. Das Formschlussbauteil 23 mit dem radial nach außen gerichteten Kragen 12 zur formschlüssigen Sicherung des eingeschobenen Riegels 16 sowie des Verbindungsabschnittes 14 begrenzt radial nach innen eine Dichttasche zur Aufnahme des Dichtrings 18.

Im Ausführungsbeispiel gemäß Fig. 9 ist die formschlüssige Verbindung zwischen dem Rohranschlussstück 7 und dem Deckel 10 wie im ersten Ausführungsbeispiel gemäß den Fig. 1 bis 3 ausgeführt. Auch das Rohranschlussstück 7 ist wie vorbeschrieben als Doppelkonnektor mit integriertem Zulaufkanal 8 und Ablaufkanal 9 ausgeführt. Zusätzlich ist das Rohranschlussstück 7 mit einem Druckregelventil 24 ausgestattet, das den Kraftstoffsystemdruck vor den Einspritzventilen relativ zum Saugrohrdruck auf einen konstanten Wert (Kraftstoffdifferenzdruck) hält. Dadurch ist die Einspritzmenge nur von der Ansteuerzeit der Einspritzventile abhängig und unter allen Betriebsumständen über die Ansteuerzeit reproduzierbar. Es wird demzufolge pro Zeiteinheit bei allen Druckverhältnissen dieselbe Menge Kraftstoff eingespritzt.

Es handelt sich bei dem Druckregelventil 24 um ein Bypassventil, das bei Überschreiten des eingestellten Druckes über eine federbelastete Membran einen Rücklaufkanal 26 für den Kraftstoff zum Tanken freigibt. Das Druckregelventil 24 besitzt eine Unterdruckleitung zum Saugrohr (Saugrohranschluss 25), damit der absolute Kraftstoffdruck proportional zum Saugrohrdruck verändert werden kann.

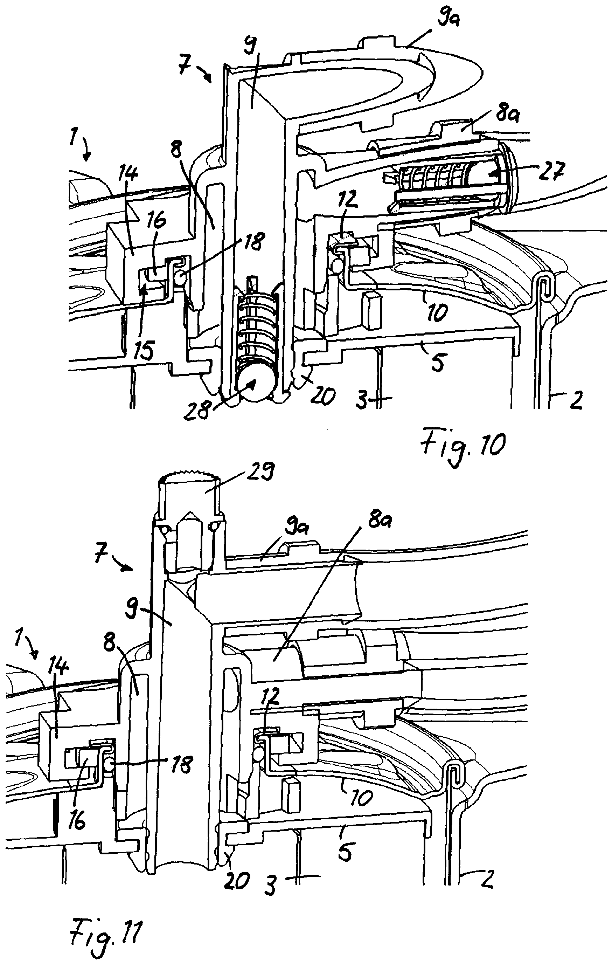

Im Ausführungsbeispiel gemäß Fig. 10 sind Rückschlagventile 27 und 28 in den Zulaufkanal 8 bzw. den Ablaufkanal 9 integriert. Im Zulaufkanal 8 befindet sich das Rückschlagventil 27 im Bereich des Stutzens 8a, im Zulaufkanal 9 liegt dagegen das Rückschlagventil 28 unmittelbar an dem in den Innenraum des Filterelementes 3 einragenden Ende. Die Rückschlagventile 27, 28 öffnen in Richtung der regulären Strömungsrichtung des Zulaufs bzw. Ablaufs von Roh- bzw. Reinfluid und schließen in die entgegengesetzte Richtung.

Im Ausführungsbeispiel gemäß Fig. 11 ist das Rohranschlussstück 7 mit einer Entlüftungsschraube 29 ausgestattet, die im Bereich des Ablaufkanals 9 angeordnet ist.

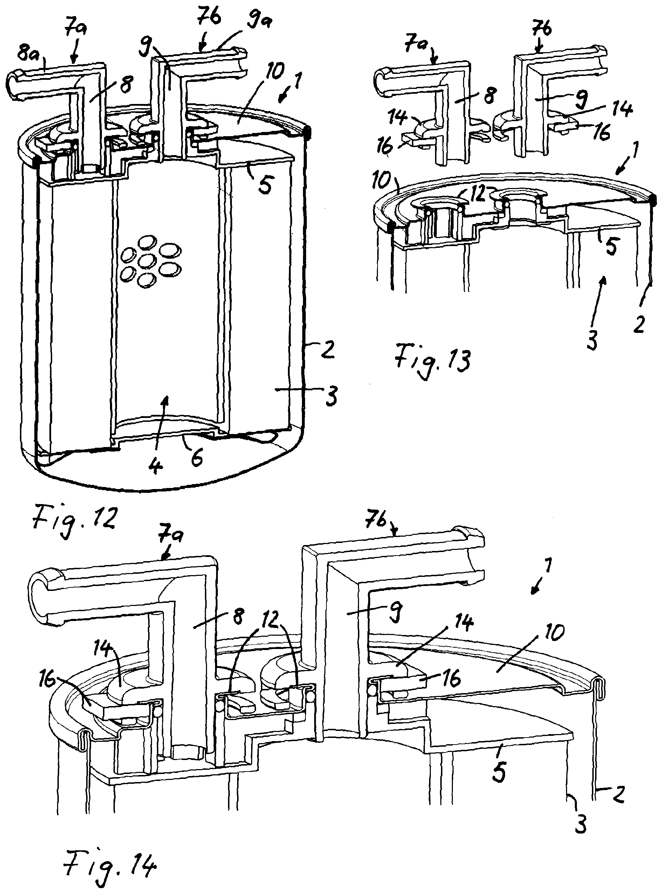

Im Ausführungsbeispiel gemäß den Fig. 12 bis 14 sind zwei separat ausgeführte Rohranschlussstücke 7a und 7b vorgesehen, die beide am Deckel 10 formschlüssig gehalten sind. Das erste Rohranschlussstück 7a weist den Zulaufkanal 8 auf, das zweite Rohranschlussstück 7b den Ablaufkanal 9.

Die Rohranschlussstücke 7a und 7b sind parallel zueinander angeordnet und beide an dem Deckel 10 in gleicher Weise formschlüssig gehalten. Das Rohranschlussstück 7b mit dem Ablaufkanal 9 ist zentrisch angeordnet, das Rohranschlussstück 7a mit dem Zulaufkanal 8 liegt hierzu parallel versetzt. In den Deckel 10 sind entsprechend zwei versetzt angeordnete Ausnehmungen eingebracht zur Aufnahme jeweils eines Rohranschlussstückes 7a bzw. 7b.

Die formschlüssige Verbindung erfolgt jeweils über den Verbindungsabschnitt 14 am Rohranschlussstück, in den eine seitliche Öffnung zum Einführen des rechteckförmigen Riegels 16 eingebracht ist. Im eingeschobenen Zustand wird der Riegel 16 von dem Kragen 12 (Fig. 13, 14) übergriffen, der separat vom Deckel 10 ausgebildet, jedoch durch Umbördeln mit dem Deckel 10 verbunden ist.

## Patentansprüche

1. Filtersystem mit einem Flüssigkeitsfilter und einem Rohranschlussstück;
der Flüssigkeitsfilter umfassend ein Filtergehäuse (2) und einen Deckel (10), welcher die offene Seite des Filtergehäuses (2) verschließt, und ein in das Filtergehäuse (2) eingesetztes, hohlzylindrisches Filterelement (3), das an den Stirnseiten Endscheiben (5, 6) aufweist, wobei in eine Endscheibe (5) eine Strömungsöffnung eingebracht ist, wobei an dem Deckel (10) des Filtergehäuses (2) oder einem mit dem Deckel (10) verbundenen Bauteil des Flüssigkeitsfilters auf der Außenseite des Deckels und von diesem axial beabstandet ein radial nach außen gerichteter Kragen (12) angeordnet ist, der einen axialen Anschlag für die formschlüssige Befestigung des mit der Strömungsöffnung kommunizierenden Rohranschlussstücks (7) bildet;
das Rohranschlussstück mit einem Verbindungsabschnitt (14) zur formschlüssigen Verbindung mit dem Deckel (10) oder dem mit dem Deckel (10) verbundenen Bauteil, wobei im verbundenen Zustand das Rohranschlussstück (7) mit der Strömungs-öffnung kommuniziert, die in die Endscheibe (5) des hohlzylindrischen Filterelements (3) eingebracht ist, wobei der Verbindungsabschnitt (14) den Kragen (12) axial übergreift wobei zur Herstellung des Formschlusses ein radial einschiebbarer Riegel (16) in eine axial zwischen dem radial gerichteten Kragen (12) und dem Verbindungsabschnitt (14) am Rohranschlussstück (7) gebildete Formschlusstasche (15) eingeführt ist, wobei der Riegel (16) quer zur Achsrichtung in die Formschlussposition überführbar ist.

2. Filtersystem nach Anspruch 1, **dadurch gekennzeichnet, dass** der Riegel (16) U-förmig oder rechteckig ausgebildet ist und/oder der Kragen ringförmig ist.

3. Flüssigkeitsfilter eines Filtersystem nach einem der vorhergehenden Ansprüche, umfassend ein Filtergehäuse (2), ein darin aufgenommenes, hohlzylindrisches Filterelement (3) und einen Deckel (10) welcher die offene Seite des Filtergehäuses (2) verschließt, wobei das Filterelement (3) an den Stirnseiten Endscheiben (5, 6) aufweist, wobei in eine Endscheibe (5) eine Strömungsöffnung eingebracht ist, wobei an dem Deckel (10) des Filtergehäuses (2) oder einem mit dem Deckel (10) verbundenen Bauteil des Flüssigkeitsfilters auf der Außenseite des Deckels und von diesem axial beabstandet ein radial nach außen gerichteter Kragen (12) angeordnet ist, der einen axialen Anschlag für die formschlüssige Befestigung des mit der Strömungsöffnung kommunizierenden Rohranschlussstücks (7) bilden kann, wobei der Kragen so konfiguriert ist, dass im zusammengebauten Zustand eine Formschlusstasche (15) axial zwischen dem radial gerichteten Kragen (12) und dem Verbindungsabschnitt (14) am Rohranschlussstück (7) bildbar ist, in welchen der Riegel (16) radial einschiebbar ist, und so, dass der Verbindungsabschnitt (14) den Kragen (12) axial übergreifen kann.

4. Flüssigkeitsfilter nach Anspruch 3, **dadurch gekennzeichnet, dass** der Kragen (12) mit dem Deckel (10) unverlierbar oder unlösbar verbunden ist.

5. Flüssigkeitsfilter nach Anspruch 4, **dadurch gekennzeichnet, dass** der Kragen (12) einteilig mit dem Deckel (10) ausgebildet oder separat vom Deckel (10) ausgebildet, jedoch mit dem Deckel (10) unlösbar verbunden ist, beispielsweise durch Schweißen, Löten, Bördeln oder Kleben.

6. Flüssigkeitsfilter nach einem der Ansprüche 3 bis 5, **dadurch gekennzeichnet, dass** eine Dichttasche (17) zur Aufnahme eines Dichtungselements (18) am Deckel (10) gebildet ist, wobei die Dichttasche (17) axial vom Kragen (12) und/oder einem Abschnitt des Deckels (10) begrenzt ist.

7. Flüssigkeitsfilter nach Anspruch 6, **dadurch gekennzeichnet, dass** der Kragen (12) auf der Außenseite des Deckel (10) axial vom Deckel (10) beabstandet und/oder ringförmig ist.

8. Flüssigkeitsfilter nach Anspruch 6 oder 7, **dadurch gekennzeichnet, dass** das Dichtungselement als Dichtring (18) ausgebildet ist, der am Deckel (10) gehalten ist.

9. Flüssigkeitsfilter nach einem der Ansprüche 6 bis 8, **dadurch gekennzeichnet, dass** die Dichttasche (17) zur Aufnahme des Dichtungselements (18) gegenüber der Formschlusstasche (15) radial nach innen versetzt angeordnet ist.

10. Flüssigkeitsfilter nach einem der Ansprüche 6 bis 9, **dadurch gekennzeichnet, dass** die Dichttasche (17) von einem separat vom Kragen (12) ausgebildeten Begrenzungsteil (21) begrenzt ist, das am Deckel (10) angeordnet ist.

11. Flüssigkeitsfilter nach einem der vorhergehenden Ansprüche 3 bis 10, **dadurch gekennzeichnet, dass** in die Endscheibe (5, 6) des Filterelements (3) ein Zentrierstutzen (19) zur Aufnahme des Rohranschlussstücks (7) eingebracht ist.

12. Flüssigkeitsfilter nach einem der vorhergehenden Ansprüchen 3 bis 11, **dadurch gekennzeichnet, dass** zwei koaxial angeordnete Anschlüsse für die Roh- und die Reinseite vorgesehen sind.

13. Flüssigkeitsfilter nach dem vorhergehenden Anspruch, **dadurch gekennzeichnet, dass** jeweils ein Dichtungselement (18, 20) in die Anschlüsse für die Roh- und die Reinseite eingesetzt ist.

14. Flüssigkeitsfilter nach einem der vorhergehenden Ansprüche 3 bis 12, **dadurch gekennzeichnet, dass** Deckel (10) und Filtergehäuse (2) unlösbar miteinander verbunden sind, beispielsweise durch Schweißen, Löten, Bördeln oder Kleben.

15. Flüssigkeitsfilter nach einem der vorhergehenden Ansprüche 3 bis 14, **dadurch gekennzeichnet, dass** der Flüssigkeitsfilter als Einwegwechselfilter ausgebildet ist, der insbesondere mit einem Filterkopf oder dem Rohranschlussstück verbindbar ist.

## Claims

1. Filter system having a liquid filter and a pipe connector;
the liquid filter comprising a filter housing (2) and a cover (10) which closes the open side of the filter housing (2), and a hollow-cylindrical filter element (3) which is inserted into the filter housing (2) and features end discs (5, 6) on the front faces, wherein a flow opening is realized in one end disc (5), wherein a radially outward directed collar (12) is disposed on the cover (10) of the filter housing (2) or on a component of the liquid filter connected to the cover (10) on the exterior side of the cover and axially spaced therefrom, which collar forms an axial stop for the positive fitting fastening of the pipe connector (7) communicating with the flow opening;
the pipe connector having a connecting section (14) for positive connection to the cover (10) or to the component connected to the cover (10), wherein, in the connected state, the pipe connector (7) communicates with the flow opening which is realized in the end disc (5) of the hollow-cylindrical filter element (3), wherein the connecting section (14) axially overlaps the collar (12), wherein, for producing the positive connection, a radially insertable latch (16) is inserted into a form-fitting pocket (15) formed axially between the radially directed collar (12) and the connecting section (14) on the pipe connector (7), wherein the latch (16) is transferable into the form-fitting position transversely to the axial direction.

2. Filter system according to claim 1, **characterized in that** the latch (16) is U-shaped or rectangular and/or the collar is annular.

3. Liquid filter of a filter system according to one of the preceding claims, comprising a filter housing (2), a hollow-cylindrical filter element (3) accommodated therein and a cover (10) which closes the open side of the filter housing (2), wherein the filter element (3) features end discs (5, 6) on the front faces, wherein a flow opening is realized in one end disc (5), wherein a radially outward directed collar (12) is disposed on the cover (10) of the filter housing (2) or on a component of the liquid filter connected to the cover (10) on the exterior side of the cover and axially spaced therefrom, which collar can form an axial stop for the positive fitting fastening of the pipe connector (7) communicating with the flow opening, wherein the collar is configured in such a way that, in the assembled state, a form-fitting pocket (15) can be formed axially between the radially directed collar (12) and the connecting section (14) on the pipe connector (7), into which the latch (16) can be inserted radially, and in such a way that the connecting section (14) can axially overlap the collar (12).

4. Liquid filter according to claim 3, **characterized in that** the collar (12) is captively or non-detachably connected to the cover (10).

5. Liquid filter according to claim 4, **characterized in that** the collar (12) is formed in one piece with the cover (10) or is formed separately from the cover (10), but is non-detachably connected to the cover (10), for example by welding, soldering, edge-beading or bonding.

6. Liquid filter according to one of the claims 3 to 5, **characterized in that** a sealing pocket (17) for receiving a sealing element (18) is formed on the cover (10), wherein the sealing pocket (17) is axially limited by the collar (12) and/or a portion of the cover (10).

7. Liquid filter according to claim 6, **characterized in that** the collar (12) on the exterior side of the cover (10) is axially spaced apart from the cover (10) and/or annular.

8. Liquid filter according to claim 6 or 7, **characterized in that** the sealing element is designed as a sealing ring (18) which is held on the cover (10).

9. Liquid filter according to one of the claims 6 to 8, **characterized in that** the sealing pocket (17) for receiving the sealing element (18) is offset radially inward with respect to the form-fitting pocket (15).

10. Liquid filter according to one of the claims 6 to 9, **characterized in that** the sealing pocket (17) is limited by a limiting part (21) designed separately from the collar (12) and disposed on the cover (10).

11. Liquid filter according to one of the preceding claims 3 to 10, **characterized in that** a centering connector (19) for receiving the pipe connector (7) is introduced into the end disc (5, 6) of the filter element (3).

12. Liquid filter according to one of the preceding claims 3 to 11, **characterized in that** two coaxially arranged connections are provided for the raw and clean sides.

13. Liquid filter according to the preceding claim, **characterized in that** a sealing element (18, 20) is inserted in each of the connections for the raw side and the clean side.

14. Liquid filter according to one of the preceding claims 3 to 12, **characterized in that** the cover (10) and the filter housing (2) are non-detachably connected to one another, for example by welding, soldering, edge-beading or bonding.

15. Liquid filter according to one of the preceding claims 3 to 14, **characterized in that** the liquid filter is designed as a disposable replacement filter which is connectable in particular to a filter head or the pipe connector.

## Revendications

1. Système de filtre ayant un filtre à liquide et un raccord de tuyau ;
le filtre à liquide comprenant un boîtier de filtre (2) et un couvercle (10) qui ferme le côté ouvert du boîtier de filtre (2), et un élément filtrant en forme de cylindre creux (3) qui est inséré dans le boîtier de filtre (2) et présente des disques d'extrémité (5, 6) sur les faces frontales, dans lequel une ouverture d'écoulement est réalisée dans un disque d'extrémité (5), dans lequel, sur le couvercle (10) du boîtier de filtre (2) ou sur un composant du filtre à liquide relié au couvercle (10), sur le côté extérieur du couvercle et à distance axiale de celui-ci, est disposée une collerette (12) dirigée radialement vers l'extérieur, qui forme une butée axiale pour la fixation par engagement positif du raccord de tuyau (7) communiquant avec l'ouverture d'écoulement ;
le raccord de tuyau ayant une section de raccordement (14) pour un raccordement positif au couvercle (10) ou au composant connecté au couvercle (10), dans lequel, à l'état connecté, le raccord de tuyau (7) communique avec l'ouverture d'écoulement qui est réalisée dans le disque d'extrémité (5) de l'élément filtrant en forme de cylindre creux (3), dans lequel la section de raccordement (14) recouvre axialement la collerette (12), dans lequel un verrou (16), pour produire l'engagement positif, pouvant être inséré radialement est inséré dans une poche d'ajustement (15) formée axialement entre la collerette (12) dirigée radialement et la section de raccordement (14) sur le raccord de tuyau (7), dans lequel le verrou (16) peut être transféré dans la position d'engagement positif transversalement au sens axial.

2. Système de filtre selon la revendication 1, **caractérisé en ce que** le verrou (16) est en forme de U ou rectangulaire et/ou la collerette est annulaire.

3. Filtre à liquide d'un système de filtre selon l'une des revendications précédentes, comprenant un boîtier de filtre (2), un élément filtrant en forme de cylindre creux (3) logé dans ledit boîtier de filtre et un couvercle (10) qui ferme le côté ouvert du boîtier de filtre (2), dans lequel l'élément filtrant (3) présente des disques d'extrémité (5, 6) sur les faces frontales, dans lequel une ouverture d'écoulement est réalisée dans un disque d'extrémité (5), dans lequel, sur le couvercle (10) du boîtier de filtre (2) ou sur un composant du filtre à liquide relié au couvercle (10), sur le côté extérieur du couvercle et à distance axiale de celui-ci, est disposée une collerette (12) dirigée radialement vers l'extérieur, qui peut former une butée axiale pour la fixation par engagement positif du raccord de tuyau (7) communiquant avec l'ouverture d'écoulement, dans lequel la collerette est configurée de telle sorte qu'à l'état monté, une poche d'ajustement (15) peut être formée axialement entre la collerette (12) dirigée radialement et la section de raccordement (14) sur le raccord de tuyau (7), où le verrou (16) peut être insérée radialement, et de telle sorte que la section de raccordement (14) peut s'engager axialement sur la collerette (12).

4. Filtre à liquide selon la revendication 3, **caractérisé en ce que** la collerette (12) est reliée de manière imperdable ou de manière indétachable au couvercle (10).

5. Filtre à liquide selon la revendication 4, **caractérisé en ce que** la collerette (12) est formée d'un seul tenant avec le couvercle (10) ou formé séparément du couvercle (10), mais reliée de manière indétachable au couvercle (10), par exemple par soudage, brasage, bordage ou collage.

6. Filtre à liquide selon l'une quelconque des revendications 3 à 5, **caractérisé en ce qu'une** poche d'étanchéité (17) destinée à recevoir un élément d'étanchéité (18) est formée sur le couvercle (10), dans lequel la poche d'étanchéité (17) est délimitée axialement par la collerette (12) et/ou par une section du couvercle (10).

7. Filtre à liquide selon la revendication 6, **caractérisé en ce que** la collerette (12) sur l'extérieur du couvercle (10) est espacée axialement du couvercle (10) et/ou annulaire.

8. Filtre à liquide selon la revendication 6 ou 7, **caractérisé en ce que** l'élément d'étanchéité est réalisé comme une bague d'étanchéité (18) qui est maintenue sur le couvercle (10).

9. Filtre à liquide selon l'une quelconque des revendications 6 à 8, **caractérisé en ce que** la poche d'étanchéité (17) destinée à recevoir l'élément d'étanchéité (18) est décalée radialement vers l'intérieur par rapport à la poche d'ajustement (15).

10. Filtre à liquide selon l'une quelconque des revendications 6 à 9, **caractérisé en ce que** la poche d'étanchéité (17) est délimitée par une pièce de délimitation (21) formée séparément de la collerette (12) et disposée sur le couvercle (10).

11. Filtre à liquide selon l'une des revendications précédentes 3 à 10, **caractérisé en ce qu'**une tubulure de centrage (19) destinée à recevoir le raccord de tuyau (7) est introduite dans le disque d'extrémité (5, 6) de l'élément filtrant (3).

12. Filtre à liquide selon l'une des revendications précédentes 3 à 11, **caractérisé en ce que** deux connexions disposées coaxialement sont prévues pour le côté brut et le côté pur.

13. Filtre à liquide selon la revendication précédente, **caractérisé en ce qu'un** élément d'étanchéité (18, 20) est inséré dans chacune des connexions pour le côté brut et le côté pur.

14. Filtre à liquide selon l'une des revendications précédentes 3 à 12, **caractérisé en ce que** le couvercle (10) et le boîtier de filtre (2) sont reliés l'un à l'autre de manière indétachable, par exemple par soudage, brasage, bordage ou collage.

15. Filtre à liquide selon l'une des revendications précédentes 3 à 14, **caractérisé en ce que** le filtre à liquide est conçu comme un filtre de rechange jetable, qui peut être raccordé notamment à une tête de filtre ou au raccord de tuyau.
